# EUROPEAN PATENT SPECIFICATION

(11) **EP 1 241 689 B1**
(45) Date of publication and mention of the grant of the patent: **31.05.2006**
(21) Application number: 02005640.4
(22) Date of filing: 12.03.2002
(51) Int. Cl.: H01H 3/16, H04M 1/02

(54) **Open/close detection device**
Auf/zu Detektionsvorrichtung
Dispositif de détection d'ouverture/fermeture

(30) Priority: 15.03.2001 JP 2001074476
(43) Date of publication of application: 18.09.2002
(73) Proprietor: ALPS ELECTRIC CO., LTD., Tokyo 145-8501 (JP)
(72) Inventor: Ninomiya, Nobuyuki, Otsuka-cho, Ota-ku, Tokyo 145-8501 (JP); Oba, Hiroki, Otsuka-cho, Ota-ku, Tokyo 145-8501 (JP); Itabashi, Takayuki, Otsuka-cho, Ota-ku, Tokyo 145-8501 (JP); Kawase, Tatsuaki, Otsuka-cho, Ota-ku, Tokyo 145-8501 (JP)
(74) Representative: Schmitt-Nilson, Gerhard

(56) References cited:
- EP-A- 0 689 332
- EP-A- 0 933 908
- EP-A- 1 047 245
- US-A- 5 175 759
- US-A- 6 094 586
- PATENT ABSTRACTS OF JAPAN vol. 2000, no. 15, 6 April 2001 (2001-04-06) & JP 2000 337008 A (SUGATSUNE IND CO LTD), 5 December 2000 (2000-12-05) & US 6 305 050 B1 (IMAI KATSUYA) 23 October 2001 (2001-10-23)

## Description

### BACKGROUND OF THE INVENTION

### 1. Field of the Invention

The present invention relates to a lid body open/close detection device according to the preamble of claim 1. It can be used for folding portable electronic equipment such as a portable telephone or a notebook type personal computer. A device of this type is known from US 5 175 759 A.

### 2. Description of the Related Art

In portable electronic equipment such as a portable telephone and a notebook-type personal computer, to enlarge a display screen and a key inputting part and to reduce a size of a profile thereof, folding equipment which forms a display screen on a lid body and can fold the lid body to a body side has been demanded and equipment which can meet such a demand has been popularly commercialized.

In this case, to detect whether the lid body is in a folded state or in an opened state, among conventional equipment, there has been known equipment which detects the open/close operation by manipulating a projection formed in the lid body such that the projection pushes a push button switch disposed in the equipment through an opening formed in the equipment or equipment which detects the open/close operation by making a magnet mounted on the lid body approach or move away from a proximity switch mounted in the equipment.

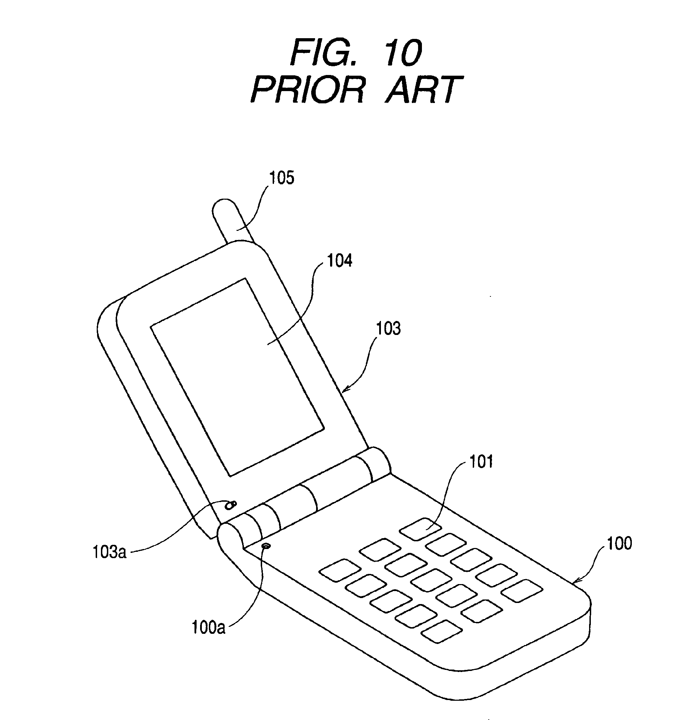

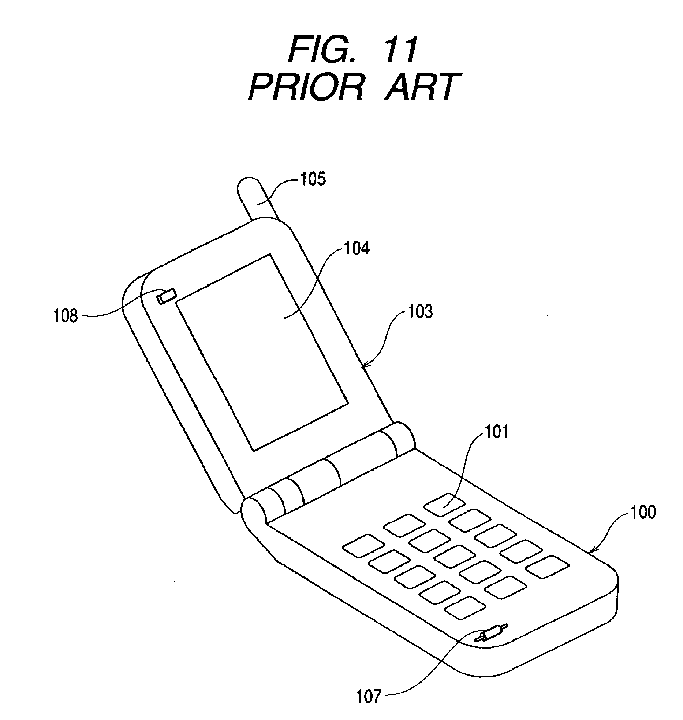

Here, the structure of a flip open/close device of a conventional portable telephone set is shown in Fig. 10 and Fig. 11. That is, Fig. 10 shows the structure which detects the opening and closing of the lid body in response to the operation of a push button switch. A casing 100 which constitutes a body is provided with a plurality of key switches 101, 101 which constitute a key inputting part. Further, in a left upper surface side of the casing 100, an opening 100a for manipulation of a push button switch is formed. At a position in the inside of the casing 100 which faces the opening 100a in an opposed manner, a push button switch not shown in the drawing is provided.

On the upper surface side of the casing 100, a lid body 103 is rotatably mounted by way of a hinge portion not shown in the drawing. A display screen 104 formed of liquid crystal or the like is disposed at the center of the lid body 103. Further, on the left lower surface side of the lid body 103, a projection 103a for manipulating the push button switch is formed. Further, an antenna 105 is provided to a right upper end side of the lid body 103.

The state shown in Fig. 10 is a state in which the lid body 103 is opened for use. In this state, the push button switch disposed in the inside of the casing 100 is not yet pushed. When the lid body 103 is closed from the current state upon completion of use, the projection 103a which is formed on the lid body 103 is inserted into the opening 100a of the casing 100 so as to push the push button switch whereby the closure of the lid body 103 can be detected.

Fig. 11 shows a structure which detects the opening and closing of the lid body using a proximity switch. In this case, in the inside of a casing 100 at the left lower surface side, a proximity switch (lead switch) 107 is disposed. Further, on the left upper surface side of a lid body 103 and at a position corresponding to the proximity switch 107, a magnet 108 for manipulating the proximity switch 107 is disposed.

The use state shown in Fig. 11 is a state in which the proximity switch 107 is not yet manipulated. When the lid body 103 is closed from this state upon completion of use, the magnet 108 provided to the lid body 103 is made to approach the proximity switch 107 so that the proximity switch 107 is manipulated and the closure of the lid body 103 is detected.

However, with respect to the above-mentioned conventional lid open/close detection structures, these structures can only detect whether the lid body 103 has pushed or approached the push button switch or the proximity switch 107 disposed in the inside of the casing 100. That is, these structures can only detect the folded state in which the lid body 103 covers the upper surface of the casing 100 and hence, there has been a problem that these structures cannot detect a state in which the lid body 103 is completely opened or an arbitrary angle which the lid body 103 takes with respect to the casing 100 in the course of the movement thereof from the folded state to the fully opened state.

Further, since it is necessary to ensure a space for disposing the switch in the inside of the lid body 103 or the casing 100, there has been a problem that it is difficult to make the electronic equipment have a thin thickness.

### SUMMARY OF THE INVENTION

Accordingly, it is an object of the present invention to provide a lid open/close detection device of electronic equipment which can solve the above-mentioned drawbacks, can detect a state in which a lid body of electronic equipment is opened at an arbitrary angle and, at the same time, can make the electronic equipment have a thin thickness.

To solve the above-mentioned tasks of the conventional electronic equipment, the present invention provides a lid open/close detection device having the features of claim 1.

Specific embodiments are defined by the dependent claims.

According to the present invention, the shaft body includes a rotary plate and the frame body is provided with a positioning plate which positions rotation of the rotary plate at a given position and a spring member which biases the positioning plate to the rotary plate, whereby the movable contact is formed such that the movable contact is biasingly brought into contact with the stationary contact due to a biasing force of a spring member.

### BRIEF DESCRIPTION OF THE DRAWINGS

Fig. 1 is a perspective view showing a portable telephone set using an open/close detection device according to one embodiment of the present invention.
Fig. 2 is an exploded perspective view showing a lid body and a casing of the portable telephone set using the same open/close detection device of the present invention in a separated state.
Fig. 3 is a partial exploded perspective view showing the relationship among the lid body, the casing and a hinge member of the portable telephone set using the same open/close detection device of the present invention.
Fig. 4 is an exploded perspective view showing the hinge member of the same open/close detection device of the present invention.
Fig. 5 is a longitudinal cross-sectional view showing the hinge member of the same open/close detection device of the present invention.
Fig. 6 is an exploded perspective view showing the second embodiment of the hinge member of the present invention.
Fig. 7 is a longitudinal cross-sectional view showing the second embodiment of the hinge member of the present invention.
Fig. 8 is an exploded perspective view showing the third embodiment of the hinge member of the present invention.
Fig. 9 is a longitudinal cross-sectional view showing the third embodiment of the hinge member of the present invention.
Fig. 10 is a perspective view showing a flip open/close detection device of a conventional portable telephone set.
Fig. 11 is a perspective view showing a flip open/close detection device of a conventional portable telephone set.

### DETAILED DESCRIPTION OF THE PREFERRED EMBODIMENTS

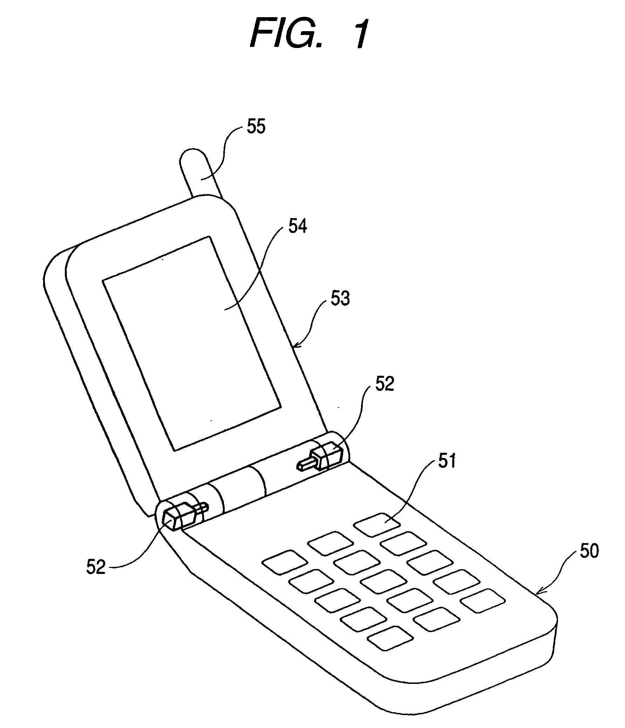

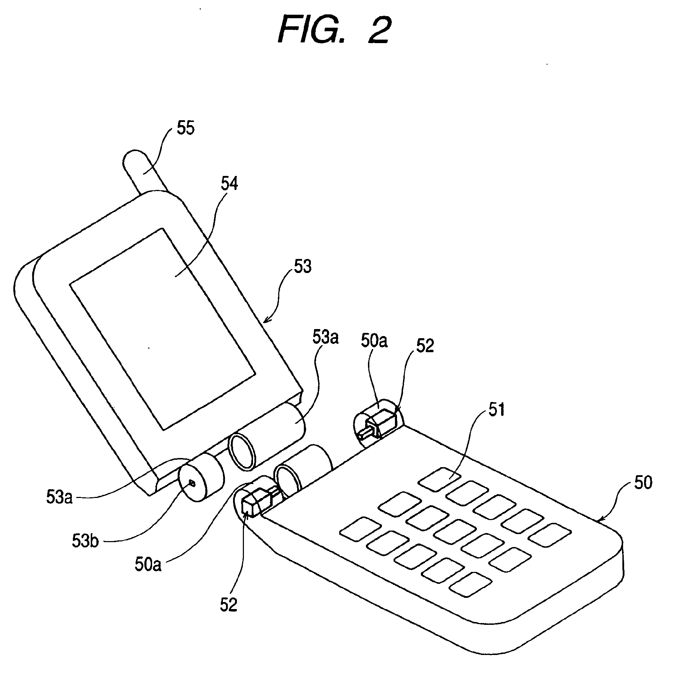

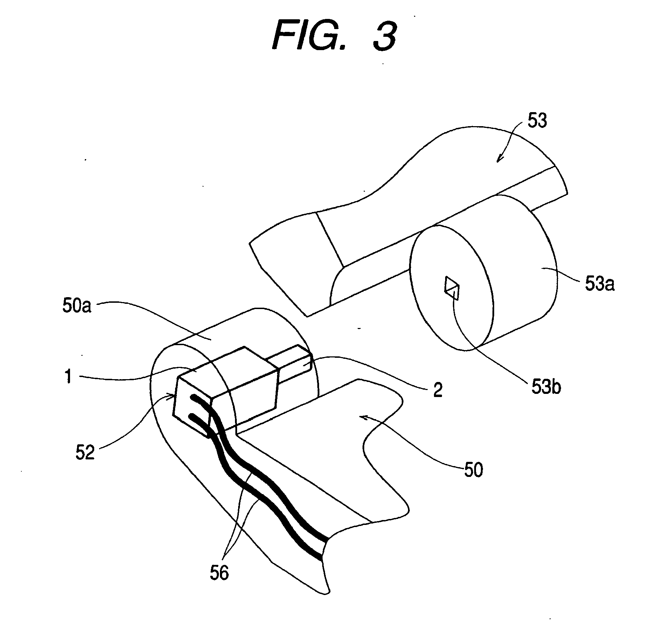

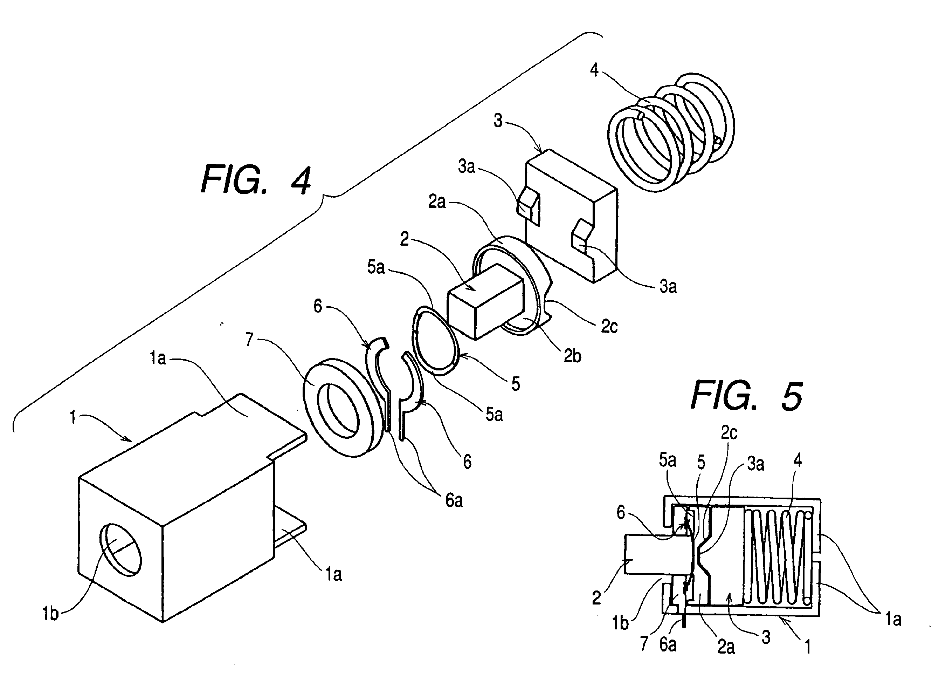

Embodiments of a lid open/close detection device according to the present invention are explained in detail in conjunction with Fig. 1 to Fig. 9 hereinafter. In the drawings, Fig. 1 is a perspective view showing a portable telephone set using an open/close detection device according to one embodiment of the present invention, Fig. 2 is an exploded perspective view showing a lid body and a casing in a separated state, Fig. 3 is a partial exploded perspective view showing the relationship among the lid body, the casing and a hinge member, Fig. 4 is an exploded perspective view showing the hinge member, and Fig. 5 is a longitudinal cross-sectional view showing the hinge member.

Fig. 1 and Fig. 2 show a portable telephone set having a flip open/close mechanism, wherein a plurality of key switches 51, 51 which constitute a key inputting part is disposed on an upper surface of a casing 50 which constitutes a body of the portable telephone set. Further, a lid body 53 is rotatably mounted on an upper end side of the casing 50 by way of hinge members 52, 52. A display screen 54 formed of liquid crystal or the like is arranged at the center of the lid body 53. Further, antenna 55 is provided to a right upper end side of the lid body 53.

Fig. 3 shows the engagement relationship among the hinge members 52, the housing 50 and the lid body 53. The hinge member 52 includes a rectangular parallelepiped frame body 1 which is formed by bending a metal sheet into a box shape and a rectangular parallelepiped shaft body 2 which is projected from the frame body 1 and is rotatably supported on the frame body 1. Further, a pair of lead lines 56 for connection are provided to one-end side of the frame body 1 when necessary. Here, the lead lines 56 are connected to stationary contacts 6 and terminal portions 6a which are arranged inside as will be explained later and are electrically communicated with en electric circuit not shown in the drawing which is accommodated in the inside of the casing 50.

The hinge member 52 is fixedly secured in a casing-side rotary proximal portion 50a which is projected from a side end of the casing 50 such that the frame body 1 is not rotated. Further, the shaft body 2 is inserted into and supported by a shaft engaging hole 53b formed in a lid-body-side rotary proximal portion 53a which is formed in a projected form from a side end of the lid body 53. In this manner, the lid body 53 is rotatably mounted on the casing 50 such that the lid body 53 is rotatable along with the rotation of the shaft body 2 supported on the lid body 53 in the inside of frame body 1. That is, the lid body 53 is rotatably supported on the casing 50 by way of the hinge members 52.

Subsequently, the structure of the hinge member 52 is explained. As shown in Fig. 4 and Fig. 5, the frame body 1 is formed by bending a metal sheet or the like into a rectangular parallelepiped box shape using a press forming. The frame body 1 has an opened portion at one side thereof and a pair of bending lugs 1a, 1a are formed on a side periphery of the opened portion in an opposed manner. A shaft hole 1b which constitutes a through hole is formed in the other side of frame body 1 which is disposed opposite to the opened portion.

The shaft body 2 is made of insulation material such as synthetic resin and is formed in a shaft shape. Further, a disc-like rotary plate 2a which is formed wider than the shaft-like portion is integrally formed on one-end side of the shaft body 2. The rotary plate 2a is provided with an accommodating recess 2b which accommodates the movable contact 5 which will be explained later at a portion thereof connected to the shaft body 2. Cam recesses 2c for positioning which are formed on a plane perpendicular to the shaft-like portion in a spaced-apart manner are provided to the back-surface side which faces the housing recess 2b. The shaft body 2 is inserted into the shaft hole 1b of the frame body 1 and is rotatably supported on the frame body 1 along with the rotary plate 2a.

A positioning plate 3 is made of insulation material such as synthetic resin and is formed in a rectangular parallelepiped shape. On one-surface side of the positioning plate 3, cam projections 3a which are engaged with the cam recesses 2c of the rotary plate 2a so as to position the rotation of the shaft body 2 to given rotational positions are formed. Further, on a back-surface side of the positioning plate 3 which is disposed opposite to the surface on which the cam projections 3a are formed, a spring receiving portion is formed. A spring member 4 is brought into contact with the spring receiving portion so as to bias the cam projections 3a of the positioning plate 3 to the cam recess 2c side of the rotary plate 2a.

The spring member 4 is constituted of a coil spring which is wound in a coil shape. The spring member 4 has one-end portion thereof brought into contact with the spring receiving portion of the positioning plate 3 and the other-end side brought into contact with a spring receiving portion which is formed at one-end side of the frame body 1 by bending the bending lugs 1a. Due to such a constitution, the spring member 4 is accommodated in the inside of the frame body 1 in a state that the positioning plate 3 is biased to the rotary plate 2a side.

Here, the movable contact 5 is made of a conductive metal sheet having spring characteristics and is formed in an annular shape. The movable contact 5 is disposed in the accommodating recess 2b of the rotary plate 2a such that the movable contact 5 is formed in an annular shape along the rotational direction of the rotary plate 2a. The movable contact 5 is formed such that both end sides thereof disposed with respect to a center line are bent in an approximately U-shape and contacts 5a which are brought into contact with stationary contacts 6 which will be explained later are provided to both distal end sides of the U-shaped sides. By bending the movable contacts 5 in an approximately U-shape, the spring characteristics are generated in the movable contact 5 per se and the contacts 5a are brought into elastic contact with the stationary contacts 6 due to this spring characteristics whereby the stable contact can be ensured.

The stationary contacts 6 are also made of a conductive metal sheet and are formed in a semi-circular shape. The stationary contacts 6 are disposed on an insulation plate 7 made of insulation material such as synthetic resin in a state that the stationary contacts 6 have one-surface sides thereof exposed. The stationary contacts 6 are arranged in pair in a symmetrical manner such that respective stationary contacts 6 are formed in an annular shape along the rotational direction of the rotary plate 2a. Further, terminal portions 6a which are extended from the stationary contacts 6 are formed on one-end sides of respective stationary contacts 6. These terminal portions 6a are, when necessary, connected with an electric circuit not shown in the drawing accommodated in the inside of the casing 50 by way of the lead lines 56. Here, the movable contact 5 and the stationary contacts 6 constitute built-in type switches.

Subsequently, the manner of operation of the hinge members 52 is explained. In the state that the hinge member 52 is mounted on the casing 50 and the lid body 53, when the lid body 53 assumes the folded state, as shown in Fig. 5, the rotary plate 2a which is integrally formed with the shaft body 2 is biased by the biasing force of the spring member 4 due to the engagement of the cam recesses 2c served for positioning with the cam projections 3a for positioning formed on the positioning plate 3 and hence, the lid body 53 is stopped in the state that the lid body 53 covers the casing 50. In this state, the movable contact 5 and the stationary contacts 6 are separated so that the switch assumes the OFF state.

Then, when the lid body 53 assumes the opened position, along with the lid body 53, the shaft body 2 which is supported on the hinge member 52 is rotated and the rotary plate 2a which is integrally formed with the shaft body 2 is also rotated. Accordingly, the cam recesses 2c served for positioning are moved away from the cam projections 3a of the positioning plate 3 against the biasing force of the spring 4 and the rotary plate 2a is rotated. Here, since the movable contact 5 is brought into contact with the stationary contact 6 so that the switch assumes the ON state.

When the lid body 53 is further opened to a position of an arbitrary angle from the above-mentioned state, since the movable contact 5 and the stationary contacts 6 are annularly arranged along the rotational direction of the rotary plate 2a, the contacts 5a of the movable contact 5 are brought into annular slide contact with the stationary contacts 6 in response to rotation of the shaft body 2. Accordingly, by adopting the constitution in which the stationary contacts 6 which are annularly arranged are brought into contact with or separated from the contacts 5a of the movable contact 5 at a plurality of arbitrary positions respectively, a plurality of rotational positions of the shaft body 2, that is, a plurality of rotational positions of the lid body 53 can be detected whereby an arbitrary opened state of the lid body 53 can be detected by detecting the rotation of the shaft body 2 of the hinge member 52.

Further, since the switch is incorporated into the hinge member 52 in the lid-body-side rotary proximal portion 53a and the casing-side rotary proximal portion 50a which are respectively projected from the side end portion of the lid body 53 and the casing 50, the constitution does not increase the thickness of a body of the portable telephone set when the lid body 53 and the casing 50 are superposed on each other in the state that they are folded to each other.

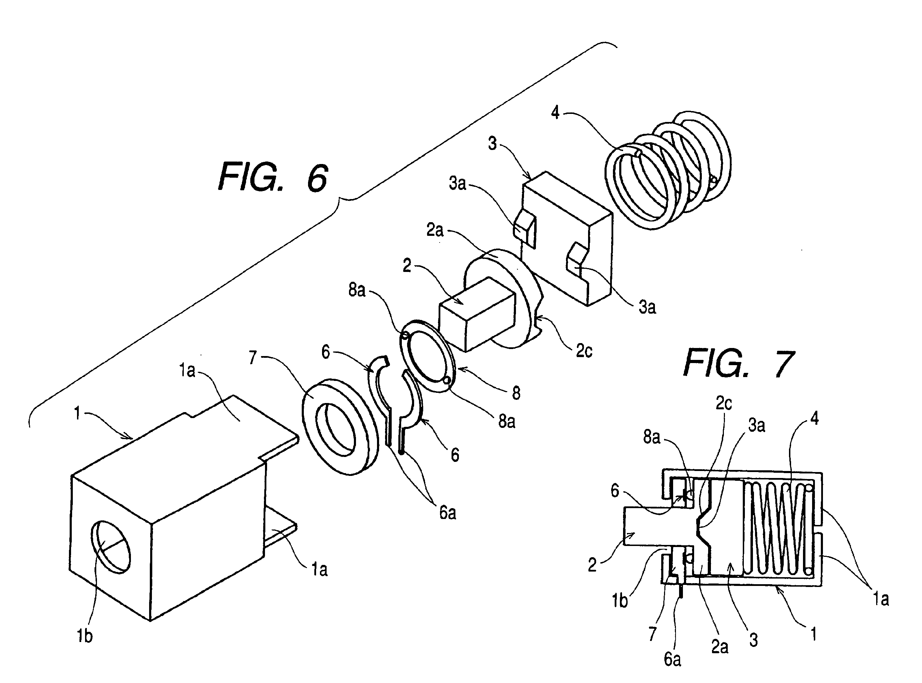

Fig. 6 and Fig. 7 show the second embodiment of the hinge member 52. This embodiment differs from the first embodiment shown in Fig. 4 and Fig. 5 with respect to the constitution of a movable contact 8 which is different from the movable contact 5 of the first embodiment in part. Parts of this embodiment which are identical with the parts shown in Fig. 4 and Fig. 5 are indicated by the same numerals and the explanation of these parts is omitted.

In this embodiment, the movable contact 8 is made of a planar conductive metal sheet and is formed in an annular shape. A pair of contacts 8a which are brought into slide contact with the stationary contact 6 are formed such that they face the annular portion in an opposed manner.

Here, the movable contact 8 per se does not have the spring characteristics. Instead, to position the rotation of the rotary plate 2a to a given position, the movable contact 8 is formed such that the movable contact 8 is brought into elastic contact with the stationary contacts 6 by making use of the resilient force of the spring member 4 which biases the positioning plate 3. In this case, since the movable contact 8 can be formed of a planar metal sheet, the shape of the movable contact 8 can be simplified so that the workability and the assembling operation of parts can be enhanced.

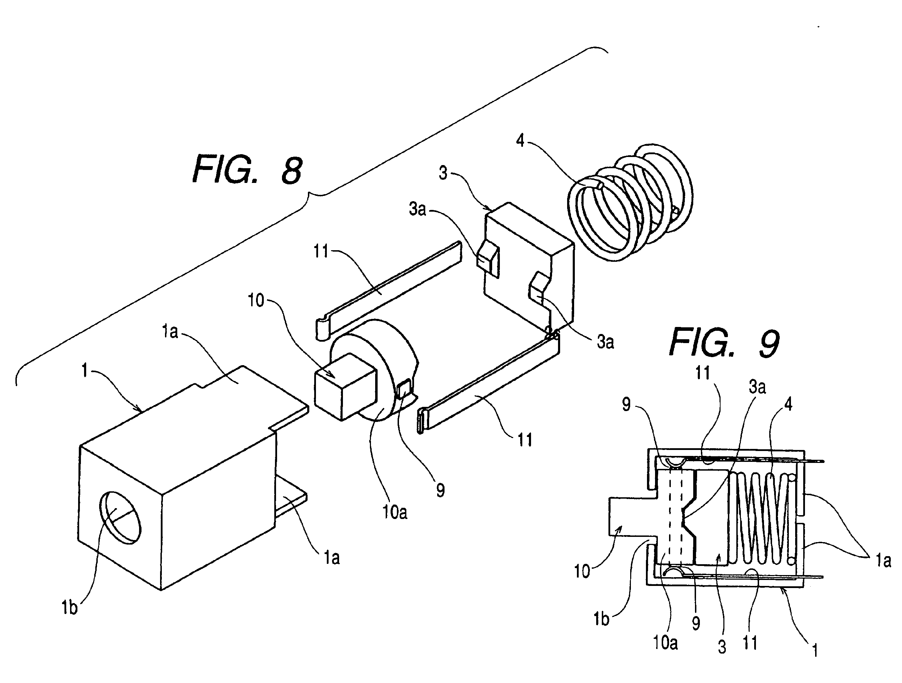

Fig. 8 and Fig. 9 show the third embodiment of the hinge member 52. This embodiment differs from the first embodiment shown in Fig. 4 and Fig. 5 with respect to the constitution of movable contacts 9 and stationary contacts 6 which are different from the movable contact 5 and the stationary contact 6 of the first embodiment in part. Parts of this embodiment which are identical with the parts shown in Fig. 4 and Fig. 5 are indicated by the same numerals and the explanation of these parts is omitted.

In this embodiment, the movable contacts 9 are arranged on a circumferential surface of a rotary plate 10a integrally formed with the shaft body 10 in the rotational direction of the rotary plate 10a at a plurality of circumferential positions such that the movable contacts 9 are exposed from the circumferential surface of the rotary plate 10a. The stationary contacts 11 which are brought into slide contact with the movable contacts 9 are formed of a metal sheet having the spring characteristics and formed in a thin elongated plate shape. These stationary contacts 11 are disposed in the inside of the frame body 1 such that the stationary contacts 11 have one-end sides thereof fixedly secured to the frame body 1.

In this case, since the stationary contacts 11 can be formed of a metal sheet having the spring characteristics in a thin elongated plate shape, the stationary contacts 11 per se can sufficiently ensure the resiliency, whereby the stationary contacts 11 ensure the sufficient contact with the movable contacts 9 thus providing the stable contact.

Also in the above-mentioned second and third embodiments, the movable contacts 8, 9 and the stationary contacts 6, 11 are annularly arranged along the rotational direction of the rotary plates 2a, 10a and hence, the movable contacts 8, 9 are annularly brought into slide contact with the stationary contacts 6, 11 along with the rotation of the shaft bodies 2, 10.

Accordingly, the open/close detection device can detect a plurality of rotational positions of the shaft bodies 2, 10, that is, the a plurality of rotational positions of the lid body 53, whereby the arbitrary opened position of the lid body 53 can be detected by the detection of rotation of the shaft body 2, 10 of the hinge member 52.

As has been described heretofore, according to the present invention, in the open/close detection device of the equipment which includes the casing, the lid body which is rotatably supported on the casing and the hinge member which mounts the frame body thereof on one of the lid body and the casing and makes the shaft body which is projected from the frame body rotatably support the other of the lid body and the casing, the hinge member arranges the movable contact which is integrally rotated with the shaft body and the stationary contact which is brought into slide contact with the movable contact in the frame body, whereby the rotation of the lid body is detected in response to the slide contact between the movable contact and the stationary contact which is generated by the rotation of the shaft body. Accordingly, the open/close detection device can detect a plurality of rotational positions of the shaft body, that is, a plurality of rotational positions of the lid body, whereby the arbitrary opened state of the lid body can be detected by the detection of the rotation of the shaft body of the hinge member. Further, since the switch is incorporated into the hinge member, it is possible to ensure the sufficient degree of freedom in performing the layout of the interior of a body of electronic equipment and to make the equipment thin. Further, the operability of assembling is facilitated.

Further, according to the present invention, the movable contact and the stationary contact are configured such that they are annularly arranged along the rotational direction of the shaft body and, at the same time, can detect a plurality of rotational positions of the lid body along with the rotation of the shaft body. Accordingly, a plurality of rotational positions can be detected with one switch so that space necessary for mounting the switch can be minimized.

Further, according to the present invention, the movable contact or the stationary contact is formed of a leaf spring having spring characteristics and the movable contact or the stationary contact is formed such that the contact is brought into elastic contact with the stationary contact or the movable contact due to the spring characteristics of the movable contact or the stationary contact per se. Accordingly, the contact between the movable contact and the stationary contact is ensured so that the stable contact is obtained.

According to the present invention, the shaft body includes a rotary plate and the frame body is provided with a positioning plate which positions the rotation of the rotary plate at a given position and a spring member which biases the positioning plate to the rotary plate, whereby the movable contact is formed such that the contact is brought into elastic contact with the stationary contact due to the resilient force of the spring member. Accordingly, it is unnecessary for the movable contact per se to have the spring characteristics and hence, the movable contact can be formed of a planar metal plate so that the shape of the movable contact can be simplified and the workability and the assembling operability of parts can be enhanced.

## Claims

1. A lid open/close detection device which includes a casing (50), a lid body (53) which is rotatably supported on the casing (50) and a hinge member (52) which mounts a frame body (1) thereof on one of the lid body (53) and the casing and makes a shaft body (2) which is projected from the frame body (1) rotatably support the other of the lid body (53) and the casing (50), wherein the hinge member (52) arranges contact (5,8,9) which is integrally rotated with the shaft body (2) and a stationary contact (6,11) which is brought into slide contact with the movable contact (5,8,9) in the frame body (1), and wherein rotation of the lid body (53) is detected in response to the slide contact between the movable contact (5,8,9) and the stationary contact (6) which is generated by rotation of the shaft body (2), **characterized in that** the shaft body (2) includes a rotary plate (2a), and wherein the frame body (1) is provided with a positioning plate (3) which fixes the rotation position of the rotary plate (2a) at a given position and a spring member (4) which biases the positioning plate (3) to the rotary plate (2a), whereby the movable contact (5,8,9) is formed such that the movable contact is brought into elastic contact with the stationary contact (6,11) due to a biasing force of the spring member (4).

2. A lid open/close detection device according to claim 1, wherein the movable contact (5,8,9) and the stationary contact (6,11) are configured such that they are annularly arranged along a rotational direction of the shaft body and, at the same time, can detect a plurality of rotational positions of the lid body along with rotation of the shaft body.

3. A lid open/close detection device of equipment according to claim 1 or claim 2, wherein the movable contact (5,8,9) or the stationary contact (6,11) is formed of a leaf spring having spring characteristics, and wherein the movable contact (5,8,9) or the stationary contact (6,11) is brought into elastic contact with the stationary contact (6,11) or the movable contact (5,8,9) due to the spring characteristics of the movable contact (5,8,9) or the stationary contact (6,11).

## Patentansprüche

1. Vorrichtung zum Detektieren einer geöffneten/geschlossenen Abdeckung, aufweisend:
ein Gehäuse (50), einen Abdeckungskörper (53), der an dem Gehäuse (50) drehbar gehaltert ist, sowie ein Scharnierelement (52), das mit einem Rahmenkörper (1) an dem Abdeckungskörper (53) oder dem Gehäuse angebracht ist und mit einem von dem Rahmenkörper (1) weg ragenden Stangenkörper (2) das jeweils andere Element aus Abdeckungskörper (53) und Gehäuse (50) drehbar abstützt, wobei das Scharnierelement (52) eine Anordnung aus einem beweglichen Kontakt (5, 8, 9), der in integraler Weise mit dem Stangenkörper (2) rotationsmäßig bewegt wird, und einem stationären Kontakt (6, 11) aufweist, der mit dem beweglichen Kontakt (5, 8, 9) in dem Rahmenkörper (1) in Gleitberührung gebracht ist, und wobei eine Rotation des Abdeckungskörpers (53) in Abhängigkeit von der Gleitberührung zwischen dem beweglichen Kontakt (5, 8, 9) und dem stationären Kontakt (6) detektiert wird, die durch die Rotation des Stangenkörpers (2) erzeugt wird,
**dadurch gekennzeichnet, dass** der Stangenkörper (2) eine Drehplatte (2a) aufweist und der Rahmenkörper (1) mit einer Positionierplatte (3), die die Rotationsstellung der Drehplatte (2a) in einer bestimmten Position fixiert, sowie mit einem Federelement (4) versehen ist, das die Positionierplatte (3) in Richtung auf die Drehplatte (2a) vorspannt, so dass der bewegliche Kontakt (5, 8, 9) derart ausgebildet ist, dass der bewegliche Kontakt aufgrund einer Vorspannkraft des Federelements (4) in elastische Kontaktberührung mit dem stationären Kontakt (6, 11) gebracht ist.

2. Vorrichtung zum Detektieren einer geöffneten/geschlossenen Abdeckung nach Anspruch 1,
**dadurch gekennzeichnet, dass** der bewegliche Kontakt (5, 8, 9) und der stationäre Kontakt (6, 11) derart konfiguriert sind, dass sie ringförmig entlang einer Rotationsrichtung des Stangenkörpers angeordnet sind und überdies zusammen mit einer Rotationsbewegung des Stangenkörpers eine Mehrzahl von rotationsmäßigen Stellungen des Abdeckungskörpers detektieren können.

3. Vorrichtung zum Detektieren einer geöffneten/geschlossenen Abdeckung nach Anspruch 1 oder 2,
**dadurch gekennzeichnet, dass** der bewegliche Kontakt (5, 8, 9) oder der stationäre Kontakt (6, 11) von einer Blattfeder mit Federeigenschaften gebildet ist, und dass der bewegliche Kontakt (5, 8, 9) oder der stationäre Kontakt (6, 11) aufgrund der Federeigenschaften des beweglichen Kontakts (5, 8, 9) bzw. des stationären Kontakts (6, 11) in elastische Kontaktberührung mit dem stationären Kontakt (6, 11) oder dem beweglichen Kontakt (5, 8, 9) gebracht ist.

## Revendications

1. Dispositif de détection d'ouverture/fermeture de couvercle qui comprend un boîtier (50), un corps de couvercle (53) qui est supporté à rotation sur le boîtier (50) et un organe d'articulation (52) qui monte un corps de cadre (1) de celui-ci sur un élément parmi le corps de couvercle (53) et le boîtier et qui fait supporter à rotation l'autre du corps de couvercle (53) et du boîtier (50) par un corps d'axe (2) qui fait saillie depuis le corps de cadre (1), dans lequel l'organe d'articulation (52) comporte un contact mobile (5, 8, 9) qui tourne d'un seul tenant avec le corps d'axe (2) et un contact statique (6, 11) qui est mise en contact glissant avec le contact mobile (5, 8, 9) dans le corps de cadre (1), et dans lequel la rotation du corps de couvercle (53) est détectée en réponse au contact glissant entre le contact mobile (5, 8, 9) et le contact statique (6) qui est produit par la rotation du corps d'axe (2), **caractérisé en ce que** le corps d'axe (2) comprend une plaquette tournante (2a), et dans lequel le corps de cadre (1) est muni d'une plaquette de positionnement (3) qui fixe la position de rotation de la plaquette tournante (2a) en une position donnée et un élément formant ressort (4) qui pousse la plaquette de positionnement (3) contre la plaquette tournante (2a), grâce à quoi le contact mobile (5, 8, 9) est formé de telle manière que le contact mobile est mis en contact élastique avec le contact statique (6, 11) en raison de la force de poussée de l'élément formant ressort (4).

2. Dispositif de détection d'ouverture/fermeture de couvercle selon la revendication 1, dans lequel le contact mobile (5, 8, 9) et le contact statique (6, 11) sont configurés de telle manière qu'ils sont placés de façon annulaire le long d'une direction de rotation du corps d'axe et peuvent en même temps détecter une pluralité de positions de rotation du corps de couvercle avec la rotation du corps d'axe.

3. Dispositif de détection d'ouverture/fermeture de couvercle selon la revendication 1 ou 2, dans lequel le contact mobile (5, 8, 9) ou le contact statique (6, 11) est constitué d'un ressort à lame ayant des caractéristiques de ressort, et dans lequel le contact mobile (5, 8, 9) ou le contact statique (6, 11) est mis en contact élastique avec le contact statique (6, 11) ou le contact mobile (5, 8, 9) en raison des caractéristiques de ressort du contact mobile (5, 8, 9) ou du contact statique (6, 11).
